# EUROPEAN PATENT SPECIFICATION

(11) **EP 3 068 033 B1**
(45) Date of publication and mention of the grant of the patent: **01.05.2019**
(21) Application number: 16160158.8
(22) Date of filing: 14.03.2016
(51) Int. Cl.: H02P 9/30

(54) **CONTROL OF HYBRID PERMANENT MAGNET MACHINE WITH ROTATING POWER CONVERTER AND ENERGY SOURCE**
STEUERUNG VON HYBRIDER PERMANENTMAGNETMASCHINE MIT ROTIERENDEM STROMWANDLER UND ENERGIEQUELLE
COMMANDE DE MACHINE À AIMANT PERMANENT HYBRIDE AVEC CONVERTISSEUR DE PUISSANCE ROTATIF ET SOURCE D'ÉNERGIE

(30) Priority: 12.03.2015 US 201514645471
(43) Date of publication of application: 14.09.2016
(73) Proprietor: Hamilton Sundstrand Corporation, Charlotte, NC 28217 (US)
(72) Inventor: ROZMAN, Gregory I., Rockford, IL 61114 (US); GIERAS, Jacek F., Glastonbury, CT 06033 (US); MOSS, Steven J., Rockford, IL 61114 (US)
(74) Representative: Dehns

(56) References cited:
- US-A1- 2014 265 744
- US-A1- 2014 266 079
- US-A1- 2014 368 075

## Description

### BACKGROUND OF THE INVENTION

This application relates to a control for an electric machine having both wound coils and permanent magnets on its rotor and wherein an output voltage is controlled with a rotating energy source.

Electric machines are known. One typical application of an electric machine may be operation as a motor, in which a current is passed through a stator to cause a rotor to rotate. The rotor rotates a shaft to, in turn, rotate a component.

Another typical application is a generator. In a generator application, a source of rotation drives the shaft to drive the rotor and this generates current in the stator.

Two general types of rotors are known. A wound field rotor has coils to pass current. When only the wound coils are utilized, the resultant machine requires a relatively large synchronous exciter.

Another type of machine utilizes a permanent magnet motor. However, a permanent magnet rotor cannot supply constant voltage over operating speed and load variation.

Hybrid rotors are known which utilize both coils and permanent magnets. However, the control of such machines is not well developed.

Another challenge with hybrid rotors is that at fault conditions continued rotation of the permanent magnets will result in some continuing generation of power, which is undesirable, particularly, in aircraft operation.

US 2014368075 relates to permanent magnet synchronous machines.

### SUMMARY OF THE INVENTION

A hybrid permanent magnet machine has a stator including armature windings. A rotor includes permanent magnets, a main field winding, and a rechargeable energy source. An output voltage control circuit, including an H bridge circuit configured to provide control current magnitude and direction in the main field winding to control the current passing across the main field windings.

These and other features may be best understood from the following drawings and specification. The present invention is defined in claims 1 and 12.

### BRIEF DESCRIPTION OF THE DRAWINGS

Figure 1 shows a hybrid machine.
Figure 2 shows a first control circuit.
Figure 3 shows an alternative control circuit.
Figure 4 shows yet another alternative control circuit.
Figure 5 shows yet another alternative control circuit.

### DETAILED DESCRIPTION

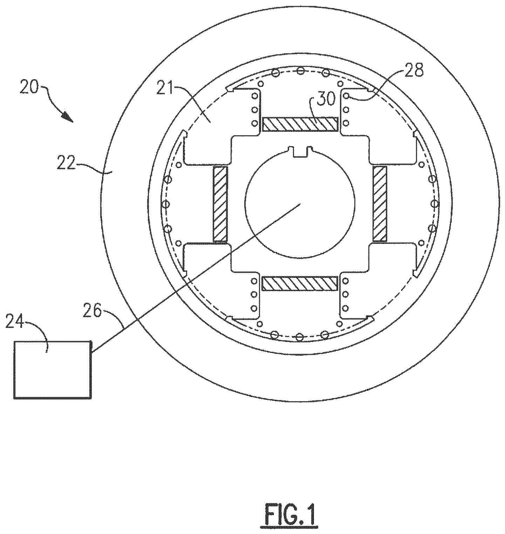

Figure 1 shows a machine 20 including a rotor 21 rotating within a stator 22. A system 24 is associated with a machine 20 and connected to the rotor 21 by a shaft 26. If the associated system 24 is an item to be driven, then the machine 20 may be a motor. On the other hand, the associated system 24 could be a source of rotation, such as a gas turbine engine on an aircraft. In such applications, machine 20 may provide a starter motor function for the gas turbine engine 24. During operation of the gas turbine engine 24, the engine would drive the shaft 26 to cause the rotor 21 to rotate and generate electric current in the stator 22.

The rotor 21 is shown having electric coils 28, as well as permanent magnets 30.

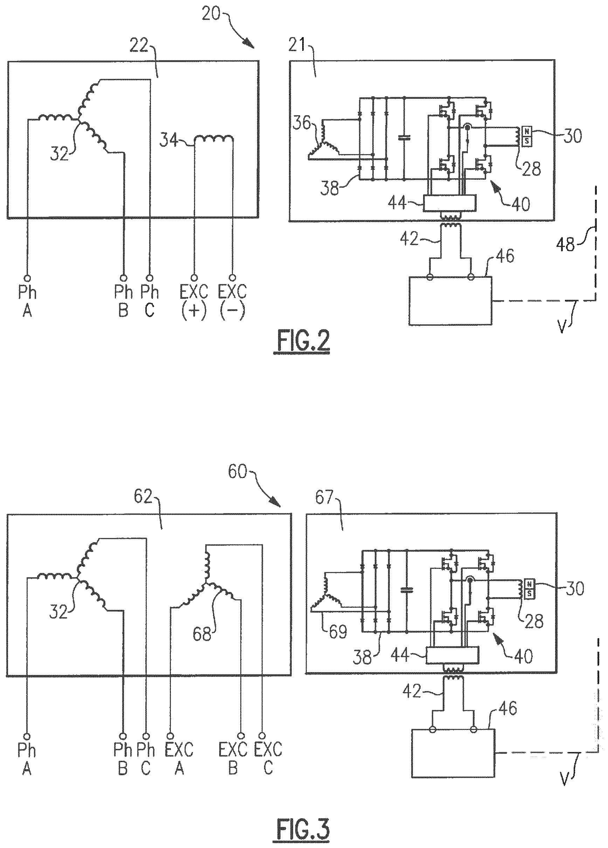

Figure 2 is an electric circuit schematic for the machine 20. As shown, the stator 22 has stator armature windings 32 along with an exciter field winding 34. The stator armature windings communicate with main field windings 28. The exciter field winding 34 communicates with exciter armature windings 36. A rotating rectifier 38 converts the power received from the exciter armature windings and passes it across an H bridge 40 to control the current in the windings 28.

As known, an H bridge comprises four transistors and four diodes. By selectively opening and closing the transistors, current can flow in the same direction, or in an opposed direction, to the main field current in the windings 28. As also shown, a communication transformer 42 communicates with an encoder/decoder 44, which controls the H bridge 40. A main control 46 receives a signal 48 indicative of the voltage output of the machine 20. The control 46 operates the H bridge 40 to either increase or decrease the current passing across the windings 28 to achieve a desired voltage from the machine 20.

Figure 3 shows an embodiment 60, which is similar to the embodiment of Figure 2. However, the stator 62 has its stator armature windings 32 and also has a high frequency transformer primary winding 68. The rotor 67 is provided with high frequency transformer secondary windings 69. The rotor 67 is otherwise similar to the Figure 2 rotor.

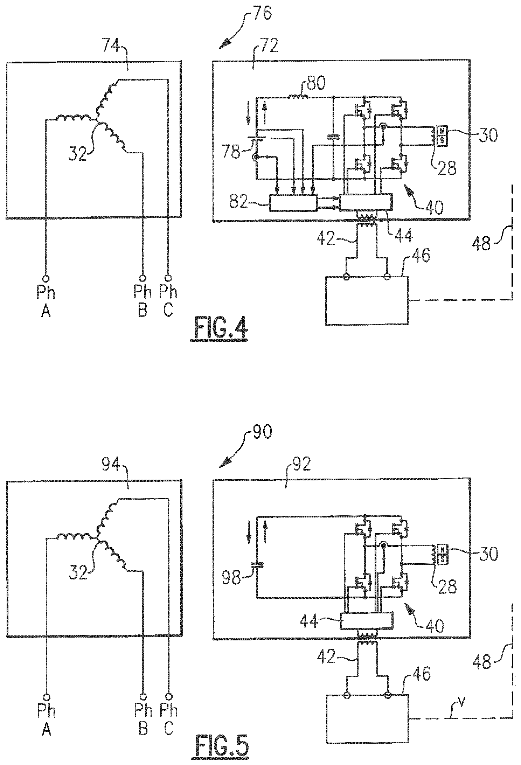

Figure 4 shows an embodiment 70 having a rotor 72 and a stator 74. The stator armature windings 32 are illustrated. The control power at the rotor 72 is generated by a battery 78. Inductor 80 and a battery field monitor 82 are also illustrated. The battery field monitor 82 monitors the voltage and power from the battery along with its temperature. These are sent to the encoder/decoder 44 and may be utilized by the control 46.

Figure 5 shows another embodiment 90 having a rotor 92 and a stator 94. Stator 94 is provided with a stator armature windings 32. Rotor 92 is provided with a super capacitor 98. During certain periods of operation, the capacitor 98 has its power dissipated to provide the control current.

The Figures 4 and 5 embodiments 70 and 90 utilize the stored power at the battery 78, or super capacitor 98 to provide the control voltage. During normal operation, power will flow from the battery 78 or super capacitor 98. However, when normal operation is stopped, a recharge mode may be entered at which power is supplied, such as from the stator armature windings 32, through the main field windings 28, and then back to battery 78 or super capacitor 98 to charge the items.

In each of the Figures 3-5, the H bridge 40 is controlled as the Figure 2 embodiment to achieve a desired voltage. In addition, at fault condition, the control 46 can drive the output voltage to zero rapidly canceling the continuing effect of the rotating permanent magnets 30.

In essence, the main control 46 takes in the voltage signal 48, and compares it to a desired signal. If the voltage signal 48 is below that which is desired, then the H bridge will be controlled such that the power will flow in the same direction as that in the coils 28 to increase the output voltage. Alternatively, should the voltage sensed from the signal 48 be too high, the H bridge will be controlled such that current will flow in an opposed direction to that flowing through the coil 28, and the output voltage will then move downwardly. During fault conditions, it will likely be this flow in opposition to the current otherwise generated such as by the continued rotation of the permanent magnets 30 that will be utilized.

The overall system provides benefits reducing the weight and volume by utilizing a hybrid machine including both wound coils and permanent magnets, but also providing accurate control. The disclosed embodiments enable voltage regulation over large speed and load variation. As mentioned, the disclosed systems will allow rapid reduction of excitation to zero during a fault condition. Further, the system efficiency is improved due to reduced losses in the generator. The disclosed systems will also facilitate advance diagnostics and prognostics and add some level of intelligence to the system.

## Claims

1. A hybrid permanent magnet machine comprising:
a stator (22) including armature windings (32);
a rotor (21) including permanent magnets (30) and a main field winding (28); and a rechargeable energy source (69); **characterized by** an output voltage control circuit (46) including an H bridge circuit (40) configured to provide a control current magnitude and direction in the main field winding (28) to control the current passing across the main field winding;
wherein the control circuit (46) is configured to monitor voltage output of the machine and control said H bridge (40) upon said monitored voltage output, and control said H bridge in the same direction as a current across the main field winding (28) if the monitored voltage is below a desired level, and in an opposed direction if the monitored voltage is above a desired level.

2. The hybrid machine as set forth in claim 1, wherein said control is programmed to bring said output voltage toward zero in the event of a fault.

3. The hybrid machine as set forth in claim 1, said control providing control signals to said rotor through a transformer (42) communicating with an encoder/decoder (44) on said rotor.

4. The hybrid permanent magnet machine as set forth in any preceding claim, said stator further including an exciter field winding (34) communicating with exciter armature windings (36) on said rotor and said exciter armature windings being said rechargeable energy source.

5. The hybrid permanent magnet machine as set forth in claim 4, wherein a rotating rectifier converts power from said exciter armature windings passing toward said H bridge.

6. The hybrid permanent magnet machine as set forth in any preceding claim, wherein said stator includes a high frequency transformer primary winding (68) and a high frequency transformer secondary winding (69) is provided on said rotor and said high frequency transformer secondary winding being said rechargeable energy source.

7. The hybrid permanent magnet machine as set forth in claim 6, wherein a rotating rectifier converts power from said exciter armature windings passing toward said H bridge.

8. The hybrid permanent magnet machine as set forth in any preceding claim, wherein said rechargeable energy source is a battery to supply power toward said H bridge and to receive power in a charge mode.

9. The hybrid permanent magnet machine as set forth in claim 8, wherein a separate charging mode is entered where said battery is recharged.

10. The hybrid permanent magnet machine as set forth in any of claims 1 to 7, wherein said rechargeable energy source is a capacitor (98) mounted on said rotor and charged or dissipated.

11. The hybrid permanent magnet machine as set forth in claim 10, wherein a charging mode is entered where said capacitor is recharged.

12. A method of operating a hybrid permanent magnet machine comprising:
controlling a H bridge on a rotor (21) to provide a desired current magnitude and direction from a rechargeable energy source (69) on said rotor to a main field winding (28), such that a voltage output of the machine is moved toward a desired amount; **characterized in that** said H bridge is controlled such that said control is in the same direction as a current across the main field winding (28) if the monitored voltage is below a desired level, and is in an opposed direction if the monitored voltage is above a desired level.

13. The method as set forth in claim 12, wherein said control being programmed to bring said output voltage toward zero in the event of a fault.

## Patentansprüche

1. Hybride Permanentmagnetmaschine, Folgendes umfassend:
einen Stator (22), der Ankerwicklungen (32) beinhaltet;
einen Rotor (21), der Permanentmagneten (30) und eine Hauptfeldwicklung (28) beinhaltet; und
eine wiederaufladbare Energiequelle (69); **gekennzeichnet durch** einen Ausgangsspannungssteuerschaltkreis (46), der einen H-Brückenschaltkreis (40) beinhaltet, der dazu konfiguriert ist, eine Steuerstromgröße und -richtung in der Hauptfeldwicklung (28) bereitzustellen, um den Stromfluss entlang der Hauptfeldwicklung zu steuern;
wobei der Steuerschaltkreis (46) dazu konfiguriert ist, den Spannungsausgang der Maschine zu überwachen und die H-Brücke (40) auf Grundlage des überwachten Spannungsausgangs zu steuern, und die H-Brücke in die gleiche Richtung wie einen Strom entlang der Hauptfeldwicklung (28) zu steuern, falls die überwachte Spannung unterhalb eines gewünschten Niveaus liegt, und in eine entgegengesetzte Richtung, falls die überwachte Spannung oberhalb eines gewünschten Niveaus liegt.

2. Hybride Maschine nach Anspruch 1, wobei die Steuerung dazu programmiert ist, die Ausgangsspannung im Falle eines Fehlers in Richtung null zu bringen.

3. Hybride Maschine nach Anspruch 1, wobei die Steuerung dem Rotor durch einen Transformator (42) Steuersignale bereitstellt, der mit einem Kodierer/Dekodierer (44) auf dem Rotor kommuniziert.

4. Hybride Permanentmagnetmaschine nach einem der vorhergehenden Ansprüche, wobei der Stator ferner eine Erregerfeldwicklung (34) beinhaltet, die mit Erregerankerwicklungen (36) auf dem Rotor kommuniziert und wobei die Erregerankerwicklungen die wiederaufladbare Energiequelle sind.

5. Hybride Permanentmagnetmaschine nach Anspruch 4, wobei ein rotierender Gleichrichter Energie von den Erregerankerwicklungen, die in Richtung der H-Brücke fließt, umwandelt.

6. Hybride Permanentmagnetmaschine nach einem der vorhergehenden Ansprüche, wobei der Stator eine Hochfrequenz-Transformatorprimärwicklung (68) beinhaltet und eine Hochfrequenz-Transformatorsekundärwicklung (69) auf dem Rotor bereitgestellt ist und die Hochfrequenz-Transformatorsekundärwicklung die wiederaufladbare Energiequelle ist.

7. Hybride Permanentmagnetmaschine nach Anspruch 6, wobei ein rotierender Gleichrichter Energie von den Erregerankerwicklungen, die in Richtung der H-Brücke fließt, umwandelt.

8. Hybride Permanentmagnetmaschine nach einem der vorhergehenden Ansprüche, wobei die wiederaufladbare Energiequelle eine Batterie ist, um Energie in Richtung der H-Brücke zu liefern und um in einem Lademodus Energie aufzunehmen.

9. Hybride Permanentmagnetmaschine nach Anspruch 8, wobei ein separater Lademodus eintritt, wenn die Batterie wieder aufgeladen wird.

10. Hybride Permanentmagnetmaschine nach einem der Ansprüche 1 bis 7, wobei die wiederaufladbare Energiequelle ein Kondensator (98) ist, der auf dem Rotor montiert und geladen oder entladen ist.

11. Hybride Permanentmagnetmaschine nach Anspruch 10, wobei ein separater Lademodus eintritt, wenn der Kondensator wieder aufgeladen wird.

12. Verfahren zum Betreiben einer hybriden Permanentmagnetmaschine, Folgendes umfassend:
Steuern einer H-Brücke auf einem Rotor (21), um einer Hauptfeldwicklung (28) eine gewünschte Stromgröße und - richtung von einer wiederaufladbaren Energiequelle (69) auf dem Rotor derart bereitzustellen, dass eine Ausgangsspannung der Maschine in Richtung eines gewünschten Betrags bewegt wird; **dadurch gekennzeichnet, dass** die H-Brücke derart gesteuert wird, dass sich die Steuerung in der gleichen Richtung wie ein Strom entlang der Hauptfeldwicklung (28) befindet, falls die überwachte Spannung sich unterhalb eines gewünschten Niveaus befindet, und sich in einer entgegengesetzten Richtung befindet, falls die überwachte Spannung sich überhalb eines gewünschten Niveaus befindet.

13. Verfahren nach Anspruch 12, wobei die Steuerung dazu programmiert ist, die Ausgangsspannung im Falle eines Fehlers in Richtung null zu bringen.

## Revendications

1. Machine à aimant permanent hybride comprenant :
un stator (22) incluant des enroulements d'induit (32) ;
un rotor (21) incluant des aimants permanents (30) et un enroulement de champ principal (28) ; et
une source d'énergie rechargeable (69) ; **caractérisée par** un circuit de commande de tension de sortie (46) incluant un circuit à pont en H (40) configuré pour fournir une grandeur et un sens de courant de commande dans l'enroulement de champ principal (28) pour commander le courant passant aux bornes de l'enroulement de champ principal ;
dans laquelle le circuit de commande (46) est configuré pour surveiller la sortie de tension de la machine et commander ledit pont en H (40) sur ladite sortie de tension surveillée, et commander ledit pont en H dans le même sens qu'un courant aux bornes de l'enroulement de champ principal (28) si la tension surveillée est en dessous d'un niveau souhaité, et dans un sens opposé si la tension surveillée est au-dessus d'un niveau souhaité.

2. Machine hybride selon la revendication 1, dans laquelle ladite commande est programmée pour porter ladite tension de sortie vers zéro dans le cas d'une anomalie.

3. Machine hybride selon la revendication 1, ladite commande fournissant des signaux de commande audit rotor par le biais d'un transformateur (42) communiquant avec un encodeur/décodeur (44) sur ledit rotor.

4. Machine à aimant permanent hybride selon une quelconque revendication précédente, ledit stator incluant en outre un enroulement de champ d'excitation (34) communiquant avec des enroulements d'induit d'excitation (36) sur ledit rotor et lesdits enroulements d'induit d'excitation étant ladite source d'énergie rechargeable.

5. Machine à aimant permanent hybride selon la revendication 4, dans laquelle un redresseur rotatif convertit une puissance issue desdits enroulements d'induit d'excitation passant vers ledit pont en H.

6. Machine à aimant permanent hybride selon une quelconque revendication précédente, dans laquelle ledit stator inclut un enroulement primaire de transformateur haute fréquence (68) et un enroulement secondaire de transformateur haute fréquence (69) est prévu sur ledit rotor et ledit enroulement secondaire de transformateur haute fréquence étant ladite source d'énergie rechargeable.

7. Machine à aimant permanent hybride selon la revendication 6, dans laquelle un redresseur rotatif convertit une puissance issue desdits enroulements d'induit d'excitation passant vers ledit pont en H.

8. Machine à aimant permanent hybride selon une quelconque revendication précédente, dans laquelle ladite source d'énergie rechargeable est une batterie pour fournir une puissance vers ledit pont en H et pour recevoir une puissance dans un mode de charge.

9. Machine à aimant permanent hybride selon la revendication 8, dans laquelle on entre dans un mode de charge séparé lorsque ladite batterie est rechargée.

10. Machine à aimant permanent hybride selon l'une quelconque des revendications 1 à 7, dans laquelle ladite source d'énergie rechargeable est un condensateur (98) monté sur ledit rotor et chargé ou dissipé.

11. Machine à aimant permanent hybride selon la revendication 10, dans laquelle on entre dans un mode de charge lorsque ledit condensateur est rechargé.

12. Procédé d'exploitation d'une machine à aimant permanent hybride comprenant :
la commande d'un pont en H sur un rotor (21) pour fournir une grandeur et un sens de courant souhaités à partir d'une source d'énergie rechargeable (69) sur ledit rotor à un enroulement de champ principal (28), de sorte qu'une sortie de tension de la machine soit déplacée vers une quantité souhaitée ;
**caractérisé en ce que** ledit pont en H est commandé de sorte que ladite commande soit dans le même sens qu'un courant aux bornes de l'enroulement de champ principal (28) si ladite tension surveillée est en dessous d'un niveau souhaité, et soit dans un sens opposé si la tension surveillée est au-dessus d'un niveau souhaité.

13. Procédé selon la revendication 12, dans lequel ladite commande est programmée pour porter ladite tension de sortie vers zéro dans le cas d'une anomalie.
